## Europäisches Patentamt

## European Patent Office

## Office européen des brevets

(11) Veröffentlichungsnummer: **0 243 579**
B1

(12) # EUROPÄISCHE PATENTSCHRIFT

(45) Veröffentlichungstag der Patentschrift:
**29.08.90**

(51) Int. Cl.⁵: **G21C 17/10**, G01T 3/04

(21) Anmeldenummer: **87100815.7**

(22) Anmeldetag: **21.01.87**

(54) Gammathermometer.

(30) Priorität: **03.02.86 DE 3603253**

(43) Veröffentlichungstag der Anmeldung:
**04.11.87 Patentblatt 87/45**

(45) Bekanntmachung des Hinweises auf die Patenterteilung:
**29.08.90 Patentblatt 90/35**

(84) Benannte Vertragsstaaten:
**BE DE ES FR SE**

(56) Entgegenhaltungen:
**EP-A- 0 064 446**
**EP-A- 0 067 756**
**DE-A- 2 910 927**
**DE-A- 3 443 720**
**US-A- 2 997 587**

**IEEE TRANSACTIONS ON NUCLEAR SCIENCE, Band NS-20, Nr. 1, Februar 1973, Seiten 545-548, California, US; D.R. CIARLO et al.: "Thin-film thermopile matrix for detecting pulsed radiation"**

(73) Patentinhaber: **Siemens Aktiengesellschaft,**
**Wittelsbacherplatz 2, D-8000 München 2(DE)**

(72) Erfinder: **Krien, Konrad, Dr., Anderlohrstrasse 11,**
**D-8520 Erlangen(DE)**
Erfinder: **Aleite, Werner, Dipl.-Ing., Hohe Warte 6,**
**D-8521 Spardorf(DE)**

## Beschreibung

Die Erfindung betrifft ein Gammathermometer, das aus einem von einem Hüllrohr umgebenen Stab besteht, in dem in mindestens einem Hohlraum mindestens ein Thermoelement angeordnet ist.

Ein derartiges Gammathermometer ist bekannt durch die US-A-4 411 859 bzw. die DE-A-29 10 927. Hierbei bewirkt die im Stab absorbierte Gammastrahlung dort einen Temperaturanstieg und einen Wärmefluß zur relativ kühlen Oberfläche des Stabes. Der Temperaturanstieg wird mit Thermoelementen bestimmt und daraus mit bekannten Parametern die absorbierte Gammastrahlenmenge berechnet.

In einem Reaktorkern bestehen Temperaturgradienten und Leistungsdichtegradienten. Diese Gradienten wirken sich beim Einsatz der bisher bekannten Gammathermometer im Reaktorkern auf die Meßergebnisse aus, da die Gammathermometer immer wenigstens in gewissen Regionen im Kern parallel zu den Temperatur- und Leistungsgradienten angeordnet sind. Ihre Länge beträgt bei bekannten Ausführungen ungefähr 1 % der Kernlänge. Über diese Länge bestehen innerhalb des Reaktorkerns Temperaturdifferenzen von mehreren 1/10 K. Diese Temperaturunterschiede bewirken so große Fehlmessungen des Gammathermometers, daß ausreichend genaue Messungen der Gammaleistung im Reaktorkern sehr erschwert sind. Ebenso führen die Leistungsdichtegradienten zu Meßwertverfälschungen. Bei den bekannten Gammathermometern sind die absorbierenden Stäbe in der Regel aus Stahl gefertigt. Mit diesem Material ist es unmöglich, ein Gammathermometer so zu konstruieren oder zu dimensionieren, daß Temperatur- und Leistungsgradienten im Reaktorkern die Meßergebnisse nicht stören. Dafür ist die Empfindlichkeit eines Gammathermometers bei ausschließlicher Verwendung von Eisen, dessen Kernladungszahl 26 ist, sehr schwach. Das Signal des Gammathermometers ist dann nicht oder nur schlecht auswertbar.

Eine Kompensation der Einflüsse des Temperatur- und Leistungsgradienten im Reaktor ist bei bisherigen Gammathermometern nicht bekannt. Bisher ist nur bekannt, die Zeitkonstanten von Gammathermometern mit aufwendiger Mikroprozessorelektronik und zusätzlichen Thermoelementen teilweise zu kompensieren. Wegen schwankender Zeitkonstanten ist auch diese Kompensation nicht zuverlässig.

Durch die DE-AI-34 43 720 ist es bei Neutronensensoren bekannt, einen ersten und einen zweiten Detektor, versehen mit je einem Thermoelement, in Reihe zueinander zu schalten, wobei dem ersten Detektor ein Kugelkörper aus spaltbarem Material und dem zweiten Detektor ein Kugelkörper aus nicht spaltbarem Material zugeordnet ist. Letzterer kann aus einer Wolfram-Legierung oder aus praktisch reinem Wolfram bestehen, also aus einem Metall, dessen Kernladungszahl und Dichte höher also im Falle von Eisen liegen. Dieser bekannte Neutronensensor dient indessen nicht der Gammaflußmessung; die dem Gammafluß analogen elektrischen Meßsignale heben sich aufgrund der Differenzbildung der Signale beider Detektoren auf, und nur das Neutronenflußsignal soll übrig bleiben.

Gegenstand der Erfindung ist demgegenüber ein Gammathermometer, das aus einem von einem Hüllrohr umgebenen Stab besteht, in dem in mindestens einem Hohlraum mindestens ein Thermoelement angeordnet ist, wobei im Bereich eines Thermoelementes im Stab ein Stabteil als Gammaabsorber und als Wärmebrücke eingefügt ist.

Der Erfindung liegt die Aufgabe zugrunde, ein solches Gammathermometer so auszubilden, daß es unabhängig von Temperatur- und Leistungsgradienten im Reaktorkern mit hoher Empfindlichkeit und kleiner Zeitkonstante arbeitet.

Diese Aufgabe wird bei einem Gammathermometer nach dem Gattungsbegriff erfindungsgemäß durch die im Kennzeichen des Anspruchs 1 angegebenen Merkmale gelöst. Vorteilhafte Weiterbildungen sind in den Patentansprüchen 2 bis 7 angegeben.

Die mit der Erfindung erzielbaren Vorteile sind vor allem in folgendem zu sehen: Damit bei Anordnung des Gammathermometers im Inneren eines Reaktorkerns Leistungsdichte oder Temperaturgradienten über der Ausdehnung des Gammathermometers ohne Einfluß auf die Meßwerte bleiben, kann das erfindungsgemäße Gammathermometer kürzer oder auf andere abgeänderte Weise als bekannte Gammathermometer konstruiert werden, ohne daß dadurch eine Verminderung der Empfindlichkeit in Kauf genommen werden müßte, weil die Auswirkungen der Bauweise durch eine Steigerung der Empfindlichkeit kompensiert werden.

Ein großer Anteil der Wechselwirkung zwischen Gammastrahlen und Materie ist durch den Fotoeffekt zu erklären. Das gilt entsprechend für die Absorption von Gammaquanten in der Gammaabsorber-Wärmebrücke des Gammathermometers. Die Wahrscheinlichkeit für Fotoeffekt steigt etwa mit der vierten Potenz der Kernladungszahl des absorbierenden Elementes an. Die Empfindlichkeit des Gammathermometers ist daher proportional zu $Z^4/\lambda$, wobei $Z$ die Kernladungszahl der absorbierenden Materie und $\lambda$ die Wärmeleitfähigkeit der Wärmebrücke ist. Die Zeitkonstante des Gammathermometers ist proportional zu

$$\frac{Z^4 \cdot c_p}{\lambda} \cdot$$

Dabei bedeutet $c_p$ die Wärmekapazität der absorbierenden Materie.

Durch die bevorzugte Verwendung von Platin als Material für die Gammaabsorber-Wärmebrücke wird die Wahrscheinlichkeit für Wechselwirkung mit Materie und insbesondere für Fotoeffekt verstärkt und infolgedessen die Empfindlichkeit und außerdem die Zeitkonstante des Gammathermometers verbessert. Der Einfluß der Kernladungszahl überwiegt gegenüber dem Einfluß der Wärmeleit fähigkeit, so daß eine Nettoempfindlichkeitssteigerung erfolgt.

Die Kernladungszahl von Platin ist 78 gegenüber 26 bei Eisen. Obwohl die Wärmeleitfähigkeit von Platin größer ist als die von Eisen, wird allein durch den Einsatz von Platin als Absorptionsmaterial und Wärmebrücke eine Empfindlichkeitssteigerung um den Faktor 10 bei gleicher Geometrie erreicht. Falls durch eine geänderte Geometrie des Gammathermometers die Empfindlichkeit bei Verwendung von Platin auf den ursprünglichen Wert reduziert wird dann wird die Zeitkonstante um den Faktor 3 verringert. Die unterschiedlichen Faktoren bei Empfindlichkeit und Zeitkonstante sind auf die gegnüber Eisen anderen Parametern (Kernladungszahl, Dichte, Wärmeleitfähigkeit und Wärmekapazität) von Platin zurückzuführen.

Ein weiterer Vorteil ist besonders bei Platin im Vergleich zu Eisen die realtive Temperaturunabhängigkeit der Wärmeleitfähigkeit $\lambda$ , weil diese Instrumente bzw. Gammathermometer im Reaktor durchaus bei unterschiedlichen Betriebstemperaturen arbeiten müssen.

Platin wird nur im Bereich des Thermoelementes verwendet. Der größere Teil des Stabes besteht aus Stahl.

Aus der eingangs erwähnten DE-A 29 10 927 ist ein Gammathermometer bekannt, dessen wärmeleitender Stab über eine bestimmte Länge im Bereich des Thermoelementes einen verringerten Querschnitt aufweist und dort von einer wärmeisolierenden Kammer umgeben ist. Im Bereich der Isolierkammer bildet sich im Stab eine axiale Wärmeströmung aus, die durch ein Differenzthermoelement zu erfassen ist. Aus der gemessenen Temperaturdifferenz wird der Wärmefluß und hieraus die absorbierte Gammastrahlenmenge berechnet.

Normalerweise ist die Kammer mit Argon gefüllt. Eine Gasfüllung kann jedoch Schwankungen der Empfindlichkeit verursachen, da schon geringe Dichteschwankungen die Isoliereigenschaften variieren. Um derartige Empfindlichkeitsschwankungen auszuschliessen, kann bevorzugt gemäß Anspruch 3 die Kammer mit einem festen Material kleiner Wärmeleitfähigkeit ausgefüllt sein. Dabei reicht es aus, wenn das Material der Kammer eine kleinere Wärmeleitfähigkeit hat als das Material der Gammaabsorber-Wärmebrücke. Beispielsweise kann bei der aus Platin bestehenden Gammaabsorber-Wärmebrücke die Kammer mit Stahl gefüllt sein.

Bei der Ausführung nach Anspruch 2 befindet sich zwischen Teilen der Platin-Gammaabsorber-Wärmebrücke und der Oberfläche des Gammathermometers nur eine Stahlschicht. Eine Isolierkammer fehlt. Hierbei wird der radiale Wärmefluß gemessen, der durch Gradienten der Leistung und der Temperatur nicht beeinflußt wird. Bei dieser Ausführung, die aufgrund der Materialwahl möglich ist, ist ein radialer Wärmefluß im Platin größer als im Stahl und daher auch über Temperaturdifferenzen der Thermoelement meßbar und auswertbar.

Im Hohlraum des Gammathermometers ist normalerweise das Differenzthermoelement mit Warmverbindungsstelle und Kaltverbindungsstelle angeordnet. Damit ist eine Messung des Wärmeflusses in der Wärmebrücke auf einfache Weise durchführbar. Es kann aber auch eine Anordnung von Doppeldifferenzthermoelementen vorgesehen sein, um die Signalgröße anzuheben. Durch deren Einsatz wird die Unabhängigkeit der Signalgröße vom Temperaturgradienten im Reaktorkern verbessert.

Gemäß Anspruch 4 sind die Platin-Gammaabsorber-Wärmebrücke und die Kammer im Gammathermometer in Stabrichtung so angeordnet, daß die Gammaabsorber-Wärmebrücke mit dem Hüllrohr nur an einer Stelle in Kontakt ist. Dadurch ist ein Wärmefluß vom Platin-Absorber zu Oberfläche des Gammathermometers nur einseitig möglich. Die Abhängigkeit des Meßsignales vom Temperaturgradienten im Reaktorkern wird dadurch vorteilhaft eliminiert.

Eine große Gammaabsorption und gleichzeitig ein gerichteter Wärmefluß wird durch eine hantelförmige Platin-Gammaabsorber-Wärmebrücke erzielt (Anspruch 5). Dabei berührt nur ein Teil der Hantel die Außenwand des Gammathermometers. Es sind auch andere Formen der Platin-Gammaabsorber-Wärmebrücke möglich, die teilweise in Stahl eingebettet sind.

Gemäß Anspruch 6 sind statt eines Differenzthermoelementes im Gammathermometer zwei Absolutthermoelemente in zwei voneinander getrennten Kanälen, insbesondere Ringkanälen, angeordnet. Die Meßstellen der Thermoelemente sind auf derselben Höhe des Stabes angeordnet. Auch hierbei kommt man ohne Isolierkammer aus. Es wird der radiale Wärmefluß gemessen, wodurch die Abhängigkeit von Störgrößen eliminiert wird.

Gemäß einer anderen Ausführungsform ist ein Differenzthermoelement in der Platin-Gammaabsorber-Wärmebrücke in einer Ausnehmung, die sich vom Kanal ausgehend im Stab radial erstreckt, angeordnet. Auch hiermit wird der radiale Wärmefluß gemessen, und es werden Einflüsse der Gradienten im Reaktorkern vermindert.

Insgesamt ergibt sich der Vorteil, daß den radialen Wärmefluß messende Gammathermometer mit einem im Reaktorkern einfügbaren Querschnitt durch die Erfindung ermöglicht sind.

Die Erfindung wird anhand der Zeichnung näher erläutert:

FIG 1 zeigt einen Teil eines Längsschnittes durch ein Gammathermometer, dessen Gammaquanten absorbierender und wärmeleitender Stab teilweise aus Platin besteht.

FIG 2 zeigt ein Gammathermometer, in dem der Platinstabteil als Gammaabsorber-Wärmebrücke und eine wärmeisolierende Kammer in Stabrichtung hintereinander teilweise überlappend angeordnet sind, so daß ein Wärmefluß nur in eine Richtung erfolgt.

FIG 3 zeigt eine hantelförmige Platin-Gammaabsorber-Wärmebrücke in einem Gammathermometer, die dessen Oberfläche nur an einer Stelle berührt.

Fig.4 zeigt ein Gammathermometer ohne wärmeisolierende Kammer, dessen Stab in axialer Folge teilweise aus Platin und teilweise aus Stahl besteht, wobei ein Wärmefluß nur in radialer Richtung erfolgt.

Fig. 5 zeigt ein Gammathermometer mit zwei Absolutthermoelementen, wobei ein Wärmefluß nur in radialer Richtung erfolgt.

Fig. 6 zeigt ein Gammathermometer mit einem Differenzthermoelement, das im Stab radial angeordnet ist, wobei ein Wärmefluß nur in radialer Richtung erfolgt.

Fig. 7 zeigt ein Gammathermometer, das eine Kombination der anderen Varianten ist.

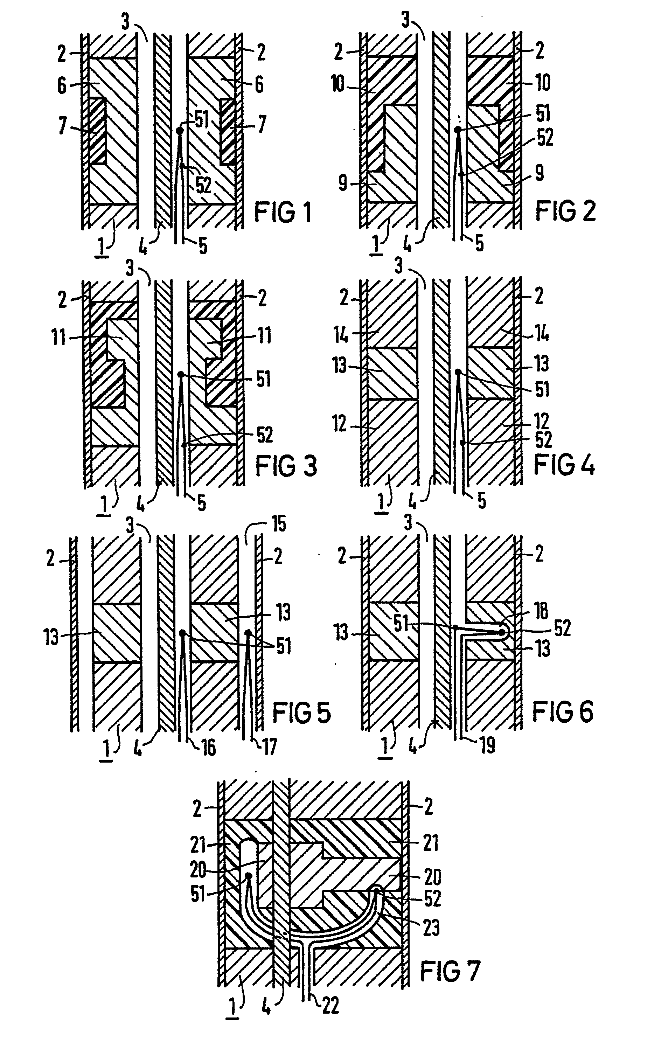

Das Gammathermometer nach Fig. 1 besteht im wesentlichen aus einem Stab 1, der von einem Hüllrohr 2 umgeben ist. In einem Kanal 3 im Inneren des Gammathermometers ist neben einem Heizkabel 4, das der Kalibrierung dient, ein Differenzthermoelement 5 angeordnet. Der Stab 1 besteht im Bereich des Thermoelementes 5 aus Platin und im übrigen aus Stahl. Der Platinstabteil ist als Platin-Gammaabsorber-Wärmebrücke 6 innerhalb des Hüllrohres 2 teilweise von einer rohrförmigen wärmeisolierenden Kammer 7 umgeben. Beide Meßstellen 51 und 52 des Differenzthermoelementes 5 können sich im inneren Bereich der Kammer 7 befinden. Von außen einfallende Gammastrahlung bewirkt über Wechselwirkungen, hauptsächlich aufgrund des Fotoeffektes eine Erwärmung des Stabes 1. Da die Kernladungszahl und die Dichte von Platin deutlich größer sind als die Werte von Eisen, ist auch die in Platin eingebrachte Wärmemenge im Vergleich zur in Eisen oder Stahl eingebrachte Wärmemenge sehr viel größer. Durch die Verwendung von Platin zumindest im Bereich des Differenzthermoelementes 5 wird also die Empfindlichkeit des Gammathermometers stark erhöht. Die hohe Empfindlichkeit aufgrund der Materialwahl gestattet es, zur Reduzierung der Einflüsse von Leistungs- und Temperaturgradienten im Reaktorkern die Konstruktion des Gammathermometers zu ändern bzw. die Längsausdehnung zu reduzieren, ohne daß die Empfindlichkeit gegenüber bekannten Gammathermometern sinkt. Aufgrund des Einsatzes von Platin für die Gammaabsorber-Wärmebrücke 6 im Stab 1 wird sogar mit einem kleineren Gammathermometer eine größere Empfindlichkeit erzielt.

Gammathermometer mit möglichst kleiner Längsausdehnung werden durch axiale Temperatur- und Leistungsgradienten, die im Reaktorkern auftreten, nur vernachlässigbar beeinflußt. Sie gestatten genaue Messungen der Gammaleistung im Reaktorkern.

Wie schon in bekannten Gammathermometern bildet sich im erwärmten Stab 1 ein Wärmefluß zur Oberfläche hin aus. Die wärmeisolierende Kammer 7 läßt im Stab 1 eine axiale Strömung entstehen, die erst außerhalb der Kammer 7 zum Hüllrohr 2 hin abbiegt. Aus der Temperaturdifferenz zwischen der Meßstelle 51 und der Vergleichsmeßstelle 52 des Differenzthermoelementes 5 läßt sich der Wärmefluß in der Gammaabsorber-Wärmebrücke 6 und daraus die eingestrahlte Gammaintensität mit geringer Fehlerbreite bestimmen.

Das wärmeisolierende Material in der Kammer 7 ist entweder wie beim Bekannten Argon oder ein festes Material mit kleiner Wärmeleitfähigkeit. Das feste Material zeichnet sich dadurch aus, daß keine Dichteschwankungen auftreten, die Empfindlichkeitsschwankungen des Gammathermometers zur Folge hätten.

Im Gammathermometer nach Fig. 2 sind eine Platin-Gammaabsorber-Wärmebrücke 9 und eine wärmeisolierende Kammer 10 axial hintereinander, teilweise überlappend angeordnet. Die Platin-Gammaabsorber-Wärmebrücke 9 berührt dabei nur an einer Stelle das Hüllrohr 2 und damit die Außenhaut des Gammathermometers. Folglich fließt die durch die Gammaquanten eingebrachte Wärmemenge in einer Richtung, in Fig. 2 nach unten, zum Hüllrohr 2 hin ab. Da die Platin-Gammaabsorber-Wärmebrucke 9 und das Hüllrohr 2 nur an einer Stelle in Kontakt stehen, wird die Abhängigkeit der Meßwerte von Temperaturgradienten eleminiert. Die Kammer 10 kann wie die Kammer 7 nach Fig. 1 Argon oder ein festes Material kleiner Wärmeleitfähigkeit enthalten.

Eine hantelförmige Platin-Gammaabsorber-Wärmebrücke 11 nach Fig. 3 nimmt wegen ihres Volumens eine große Wärmemenge auf und ist gleichzeitig so geformt, daß sich in einem engen Teil eine vergrößerte Temperaturdifferenz einstellt. Der Wärmefluß ist außerdem gerichtet, da nur ein Hantelteil das Hüllrohr 2 des Gammathermometers berührt. Dadurch wird im Thermoelement ein großes Signal erzeugt.

Die Platin-Gammaabsorber-Wärmebrücke 11 kann ebenso verschiedene andere Formen haben. Dabei wird stets in einer großen Platinmasse eine große Wärmemenge absorbiert und durch eine geringe radiale Ausdehnung der Platin- Wärmebrücke im Bereich des Thermoelementes wird gegenüber einer beispielsweise quaderförmigen Wärmebrücke eine erhöhte Temperatur und damit ein größeres Meßsignal erzielt. Schließlich wird durch die Wahl der Kontaktstellen zwischen Platin-Gammaabsorber-Wärmebrücke und Hüllrohr die Richtung des Wärmeflusses bestimmt.

Ein Gammathermometer nach Fig. 4 kommt ohne wärmeisolierende Kammer aus. Zwischen zwei Stahlstabteilen 12 und 14, ist eine Platin-Gammaabsorber-Wärmebrücke 13, die sich vom Kanal 3 bis zum Hüllrohr 2 erstreckt, angeordnet. Hierbei bildet sich im Gammathermometer ein radialer Wärmefluß aus, der in Platin größer ist als in Stahl. Der Unterschied wird mit einem Differenzthermoelement 5 erfaßt und ausgewertet. Das Gammathermometer nach Fig. 4 arbeitet fast unabhängig von axialen Gradienten.

In einem Gammathermometer nach Fig. 5 ist zwischen dem Stab 1 und dem Hüllrohr 2 mindestens ein weiterer Kanal 15 angeordnet. In diesem Kanal 15 und im mittleren Kanal 3 befindet sich jeweils ein Absolutthermoelement 16, 17. Im übrigen entspricht dieses Gammathermometer demjenigen nach Fig. 4. Die Verbindungsstellen 51 der Absolut thermoelemente 16, 17 sind im Bereich der Platin-Gammaabsorber-Wärmebrücke 13 beide auf der selben Höhe des Stabes 1 angeordnet. Durch diese Anordnung von Thermoelementen 16, 17 wird der zum Hüllrohr 2 hin gerichtete radiale Wärmefluß in der Platin-Gammaabsorberwärmebrücke 13 gemessen. Die Differenz der Meßwerte der beiden Thermoelemente 16, 17 wird als Signal ausgewertet. Ein Gammathermometer nach Fig. 6 weist in der Platin-Gammaabsorber-Wärmebrücke 13 eine sich radial erstreckende Ausnehmung 18 auf. Ein gebogenes Differenzthermoelement 19 erstreckt sich vom Kanal 3 aus in diese Ausnehmung 18 hinein. Die beiden Verbindungsstellen 51,52 des Differenzthermoelementes 19 sind dabei auf derselben Höhe des Gammathermometers angeordnet. Wie auch beim Gammathermometer nach Fig. 5 wird im Gammathermometer nach der Fig. 6 in der Platin-Gammaabsorber-Wärmebrücke 13 der radiale Wärmefluß bestimmt. Der Aufwand für die Verdrahtung ist jedoch geringer als bei der Ausführungsform mit zwei Absolutthermoelementen 16, 17.

Ein Gammathermometer nach Fig. 7 vereinigt Vorteile der zuvor dargestellten Gammathermometer. Im Hüllrohr 2 sind eine Platin-Gammaabsorber-Wärmebrücke 20 und angrenzend mit Argon oder einem festen Wärmeisolator gefüllte Kammern 21 angeordnet. Ein Differenzthermoelement 22 weist zwei Äste auf, die sich in zwei gabelförmig angeordneten Kanälen 23 erstrecken. Die Kanäle 23 enden im Bereich der Platin-Gammaabsorber-Wärmebrücke 20. Die Platin-Gammaabsorber-Wärmebrücke 20 ist unsymmetrisch geformt und berührt das Hüllrohr 2 nur einseitig. Die Verbindungsstellen des Differenzthermoelementes 22 sind auf derselben Höhe des Gammathermometers angeordnet. Sie erfassen einen zum Hüllrohr 2 gerichteten radialen Wärmestrom in der Platin-Gammaabsorber-Wärmebrücke 20.

Alle gezeigten Gammathermometer kommen gegenüber bekannten Ausführungsformen mit kleinerer axialer Ausdehnung aus und erzielen trotzdem eine höhere Empfindlichkeit.

Sie sind daher unempfindlich für axiale Temperatur- und Leistungsgradienten, die im Inneren eines Reaktorkerns auftreten. Dies trifft besonders für die Konstruktionsformen mit radialem Wärmefluß nach Fig. 5, 6 und 7 zu.

## Patentansprüche

1. Gammathermometer, das aus einem von einem Hüllrohr (2) umgebenen Stab (1) besteht, in dem in mindestens einem Hohlraum (3, 15) mindestens ein Thermoelement (5; 16, 17; 19; 22) angeordnet ist, wobei im Bereich eines Thermoelementes (5; 16, 17; 19, 22) im Stab (1) ein Stabteil als Gammaabsorber und als Wärmebrücke (6; 9; 11; 13; 20) eingefügt ist, **dadurch gekennzeichnet,** daß im Stab (1) die Gammaabsorber-Wärmebrücke (6; 9; 11; 13; 20) aus Platin besteht, welches eine deutlich höhere Kernladungszahl und Dichte als Eisen hat, wobei die übrigen Teile des Stabes (1) aus Stahl bestehen.

2. Gammathermometer nach Anspruch 1, **dadurch gekennzeichnet,** daß sich die Gammaabsorber-Wärmebrücke (13; 20) in Höhe der Meßstelle (51) eines Thermoelementes (5; 16, 17; 19; 22) radial direkt bis zum Hüllrohr (2) erstreckt, so daß radialer Wärmefluß vorherrscht.

3. Gammathermometer nach Anspruch 1, wobei der Stab (1) in einem bestimmten Bereich eines Thermoelementes (5; 22) einen verringerten Querschnitt aufweist und dort von einer wärmeisolierenden Kammer (7; 10; 21) umgeben ist, **dadurch gekennzeich-** net, daß die Kammer (7; 10; 21) mit einem festen Material kleiner Wärmeleitfähigkeit gefüllt ist.

4. Gammathermometer nach den Ansprüchen 1 oder 2, **dadurch gekennzeichnet,** daß die Gammaabsorber-Wärmebrücke (9; 11; 13; 20) mit dem Hüllrohr (2) nur an einer Stelle in Kontakt ist.

5. Gammathermometer nach Anspruch 4, **dadurch gekennzeichnet,** daß die Gammaabsorber-Wärmebrücke (11) hantelförmig ausgebildet ist.

6. Gammathermometer nach Anspruch 1, dadurch gekennzeichnet, daß im Stab (1) in verschiedenem Abstand von seiner Mittellängsachse zwei Kanäle (3, 15) insbesondere Ringkanäle vorhanden sind und daß in jedem Kanal (3, 15) jeweils ein Absolutthermoelement (16, 17) angeordnet ist, deren Meßstellen (51) im Bereich der Gammaabsorber-Wärmebrücke (13) auf derselben Höhe des Stabes (1) angeordnet sind, so daß ein radialer Wärmefluß gemessen wird.

7. Gammathermometer nach den Ansprüchen 1 oder 2, dadurch gekennzeichnet, daß in der Gammaabsorber-Wärmebrücke (13) eine vom Kanal (3) ausgehende und sich radial erstreckende Ausnehmung (18) vorhanden ist, und daß die beiden Meßstellen (51, 52) eines Differenzthermoelementes (19) in der Ausnehmung (18) angeordnet sind.

## Claims

1. Gamma thermometer which comprises a rod (1) surrounded by a jacket tube (2) in which there is arranged in at least one hollow chamber (3, 15) at least one thermo-element (5; 16, 17; 19; 22), and in the region of one thermo-element (5; 16, 17; 19; 22) a rod portion is inserted in the rod (1) as a gamma absorber and as a heat bridge (6; 9; 11; 13; 20), characterised in that in the rod (1) the gamma absorber heat bridge (6; 9; 11; 13; 20) is made of platinum which has a considerably higher atomic number and density than iron, and the other parts of the rod (1) are made of steel.

2. Gamma thermometer according to claim 1, characterised in that the gamma absorber heat bridge (13; 20) extends radially directly to the jacket tube (2) on a level with the measuring point (51) of a thermo-element (5; 16, 17; 19; 22) so that radial heat flow prevails.

3. Gamma thermometer according to claim 1, wherein the rod (1) has a reduced cross section in a specific region of one thermo-element (5; 22) and is surrounded there by a heat-insulating chamber (7; 10; 21), characterised in that the chamber (7; 10; 21) is filled with a solid material of low heat conductivity.

4. Gamma thermometer according to claims 1 or 2, characterised in that the gamma absorber heat bridge (9; 11; 13; 20) is in contact with the jacket tube (2) only at one point.

5. Gamma thermometer according to claim 4, characterised in that the gamma absorber heat bridge (11) is dumb-bell shaped.

6. Gamma thermometer according to claim 1, characterised in that two channels (3, 15), in particular annular channels, are present in the rod (1) at differing distances from its central longitudinal axis, and that in each channel (3, 15) there is respectively arranged an absolute thermo-element (16, 17) whose measurement points (51) are arranged in the region of the Gamma absorber heat bridge (13) on the same level as the rod (1) so that a radial heat flow is measured.

7. Gamma thermometer according to claims 1 or 2, characterised in that in the gamma absorber heat bridge (13) there is a recess (18) proceeding from the channel (3) and extending radially, and in that the two measuring points (51, 52) of a differential thermo-element (19) are arranged in the recess (18).

## Revendications

1. Thermomètre gamma, constitué par un barreau (1) entouré par un tube enveloppe (2) et dans lequel au moins un thermocole (5; 16, 17; 19; 22) est disposé dans au moins une cavité (3, 15), et dans lequel au voisinage d'un thermocouple (5; 16, 17; 19, 22) est inséré, dans le barreau (1), un élément du barreau formant absorbeur du rayonnement gamma et pont thermique (6; 9; 11; 13; 20), caractérisé par le fait que, dans le barreau (1), le pont thermique (6; 9; 11; 13; 20) à absorbeur de rayonnement gamma est constitué par du platine, qui possède un numéro atomique et une densité, nettement plus élevés que pour le fer, les autres parties du barreau (1) étant réalisées en acier.

2. Thermomètre gamma selon la revendication 1, caractérisé en ce que le pont thermique (13; 20) à absorbeur de rayonnement gamma s'étend radialement directement jusqu'au tube enveloppe (2), à la hauteur du point de mesure (51) d'un thermocouple (5; 16, 17; 19; 22), de sorte qu'un flux thermique radial prédomine.

3. Thermomètre gamma suivant la revendication 1, dans lequel le barreau (1) possède, dans une zone déterminée au voisinage d'un thermocouple (5; 22), une section transversale réduite et est entouré, en cet endroit, par une chambre (7; 10; 21) réalisant une isolation thermique, caractérisé par le fait que la chambre (7; 10; 21) est remplie par un matériau solide possédant une faible conductibilité thermique.

4. Thermomètre gamma suivant les revendications 1 ou 2, caractérisé par le fait que le pont thermique (9; 11; 13; 20) à absorbeur de rayonnement gamma est en contact avec le tube enveloppe (2) seulement en un point.

5. Thermomètre gamma suivant la revendication 4, caractérisé par le fait que le pont thermique (11) à absorbeur de rayonnement gamma est réalisé sous la forme d'un haltère.

6. Thermomètre gamma suivant la revendication 1, caractérisé par le fait que deux canaux (3, 15), notamment des canaux annulaires, sont ménagés dans le barreau (1) à des distances différentes de son axe médian longitudinal et que dans chaque canal (3, 15) est disposé respectivement un thermocouple de mesure de la température absolue (16, 17), dont les points de mesure (51) sont disposés, au voisinage du pont thermique (13) à absorbeur de rayonnement gamma, à la même hauteur sur le barreau (1) de sorte qu'on mesure un flux thermique radial.

7. Thermomètre gamma suivant les revendicatioins 1 ou 2, caractérisé par le fait qu'un évidement radial (18), qui s'étend à partir du canal (3), est ménagé dans le pont thermique (13) à absorbeur de rayonnement gamma et que les deux points de mesure (51, 52) d'un thermocouple différentiel (19) sont disposés dans l'évidement (18).

EP 0 243 579 B1

FIG 1

FIG 2

FIG 3

FIG 4

FIG 5

FIG 6

FIG 7